# EUROPÄISCHE PATENTSCHRIFT

(11) **EP 2 315 299 B1**
(45) Veröffentlichungstag und Bekanntmachung des Hinweises auf die Patenterteilung: **28.06.2017**
(21) Anmeldenummer: 10013368.5
(22) Anmeldetag: 06.10.2010
(51) Int. Cl.: H01M 8/0662, H01M 8/04014

(54) **Vorrichtung zum Führen mindestens eines Fluids und Brennstoffzellenheizgerät**
Device for guiding at least one fluid and fuel cell heating device
Dispositif destiné à guider au moins un fluide et appareil de chauffage à cellules de combustibles

(30) Priorität: 22.10.2009 DE 102009050214
(43) Veröffentlichungstag der Anmeldung: 27.04.2011
(73) Patentinhaber: BAXI INNOTECH GmbH, 20539 Hamburg (DE)
(72) Erfinder: Stender, Silvio, 23911 Ziethen (DE); Hoffmann, Christian, 22119 Hamburg (DE); Klose, Philipp, 22769 Hamburg (DE); Reimann, Marc, 20257 Hamburg (DE)
(74) Vertreter: Hauck Patentanwaltspartnerschaft mbB

(56) Entgegenhaltungen:
- EP-A2- 1 475 577
- WO-A1-2005/061904
- WO-A1-2005/088648
- DE-A1- 10 113 725
- FR-A1- 2 911 176
- GB-A- 1 258 763
- GB-A- 1 448 927
- US-A- 3 115 450
- US-A- 3 288 998

## Beschreibung

Die Erfindung betrifft eine Vorrichtung zum Führen mindestens eines Fluids, insbesondere eines Gases oder einer Flüssigkeit. Die Erfindung betrifft außerdem ein Brennstoffzellenheizgerät. Vorrichtungen zum Führen von Fluiden kommen in unterschiedlichen Bereichen zum Einsatz, wie zum Beispiel auch in Brennstoffzellenheizgeräten. Dort kommen ferner entzündliche Gase zur Anwendung, denen oftmals ein detektierbarer Anteil zugesetzt wird, um die Gase im Fall eines unerwünschten Gasaustritts, wie bei einer Leckage, schnell wahrnehmen zu können. So wird Erdgas z.B. ein schwefelhaltiges Odorierungsmittel, welches einen intensiven Geruch (Warngeruch) aufweist, zugesetzt.

Erdgas dient als Primärenergieträger, um daraus in der Reformereinheit eines Brennstoffzellenheizgeräts ein wasserstoffreiches Gas zu erzeugen. Es enthält neben natürlichen Schwefelverbindungen, wie Schwefelwasserstoff (H₂S), Dimethylsulfid (CH₃-S-CH₃) oder Kohlenstoffdisulfid (CS₂) auch die gezielt zugesetzten beispielsweise schwefelhaltigen Geruchsstoffe. Diese Odorierungsmittel bestehen z.B. aus Verbindungen wie Mercaptanen (R-SH) oder Tetrahydrothiophen (THT). Wenn Schwefelverbindungen aber auf die aktiven Zentren der in solchen Reformereinheiten z.B. eingesetzten Nickel- oder Edelmetallkatalysatoren treffen, kommt es zur Bildung von Sulfiden bzw. von Schwefelwasserstoffen, die die Funktion des Katalysators irreversibel beeinträchtigen (Vergiftung/Degradation). Auch wird die Lebensdauer und Leistungsfähigkeit nachfolgender Prozessstufen wie z.B. von Niedertemperatur-Polymerelektrolytmembran-Brennstoffzellen durch Anlagerung von Schwefel negativ beeinträchtigt, wenn dieser in den weiteren Energieumwandlungsprozess eines Brennstoffzellenheizgeräts gelangt. Aus diesem Grund ist in Brennstoffzellenheizgeräten eine Entschwefelung des Erdgases erforderlich. Eine entsprechende Entschwefelungsvorrichtung wird dem Reformierungsprozess üblicherweise vorgeschaltet und alle Schwefelverbindungen (S) werden durch die darin eingesetzten Adsorber aufgenommen. Um ein schwefelfreies Erdgas bereitzustellen, kommen z.B. Kartuschen zum Einsatz, die Aktivkohlefilter oder Molsiebe oder eine Kombination von beiden enthalten. Diese Kartuschen sind oft als einfacher Rohrreaktor mit einem Reaktionsraum, in der sich der pulver-, tabletten- oder stäbchenförmige Adsorber zum Durchströmen befindet, ausgebildet.

Mit den bekannten Vorrichtungen können jedoch in der Praxis die von Brennstoffzellenheizgeräten erforderlichen Standzeiten und Wartungsintervalle oftmals nicht erreicht werden. Ein häufiger Wechsel dieser Kartuschen, die auch eine beträchtliche Baugröße aufweisen, ist somit erforderlich. Dies ist u.a. im eingesetzten Adsorber (z.B. Aktivkohle) begründet, der ein ungünstiges Adsorptionsverhalten von H₂S wie eine Co-Adsorption von Gasbegleitstoffen aufweist.

Insbesondere bei Anwendung der selektiven Adsorption werden Schwefeladsorber eingesetzt, die für eine optimal ablaufende Adsorptionsreaktion und für das Erreichen ausreichender Standzeiten eine verhältnismäßig hohe Leerrohr - Strömungsgeschwindigkeit von z.B. mehr als 0,3 m/s benötigen. Ein weiterer maßgeblicher Grund für das Erreichen hoher Standzeiten bei derartigen Adsorbern ist die jeweils vorherrschende Umgebungstemperatur. Diese ist, da die Kartuschen meist im Anlageninnern eines Brennstoffzellenheizgeräts installiert sind, verhältnismäßig hoch. Die Adsorptionswirkung solcher Materialien nimmt aber mit erhöhter Umgebungstemperatur ab, was die Standzeit demzufolge verringert. Daher ist eine möglichst niedrige Einsatztemperatur (z.B. Raumtemperatur) anzustreben, d.h. die Installation außerhalb eines Brennstoffzellenheizgeräts. Hier besteht jedoch das Problem, dass das entschwefelte Erdgas naturgemäß nun nicht mehr am Geruch erkannt werden kann. Kommt es an der Entschwefelungsvorrichtung also zu einer externen Leckage, kann diese von den dem Gas ausgesetzten Personen nicht mehr festgestellt werden. Dies stellt angesichts der Entzündlichkeit des Erdgases eine bedeutende Sicherheitsbeeinträchtigung dar.

Aus EP 1 475 577 A2 ist ein Brennstoffzellenheizgerät bekannt, dessen Gehäuse mit Ausnahme einer raumluftunabhängigen Luftzuführung für den Brenner und die Brennstoffzelle luftdicht ausgebildet ist. Auf diese Weise soll unter anderem verhindert werden, dass im Störfall anfallende Leckagegase in die Umgebung des Gerätes gelangen können. Außerdem ist aus DE 101 13 725 A1 eine Vorrichtung gemäß dem Oberbegriff von Anspruch 1 bekannt.

Ausgehend von dem erläuterten Stand der Technik liegt der Erfindung die Aufgabe zugrunde, eine Vorrichtung der eingangs genannten Art bereitzustellen, die in sicherer Weise mindestens ein Fluid leiten kann, welches einen detektierbaren Anteil nicht mehr aufweist. Außerdem liegt der Erfindung die Aufgabe zugrunde, ein Brennstoffzellenheizgerät mit erhöhter Standzeit und somit größerem Wartungsintervall hinsichtlich der Entschwefelungsleistung bereitzustellen.

Die Erfindung löst diese Aufgabe durch den unabhängigen Anspruch 1. Vorteilhafte Ausgestaltungen finden sich in den abhängigen Ansprüchen, der Beschreibung und den Figuren.

Die Erfindung löst die Aufgabe zum einen durch eine Vorrichtung zum Führen mindestens eines Fluids, umfassend eine Fluideintrittsöffnung und eine Fluidaustrittsöffnung, wobei zwischen der Fluideintrittsöffnung und der Fluidaustrittsöffnung ein erster Strömungsbereich für ein erstes, einen detektierbaren Anteil enthaltendes Fluid und ein zweiter Strömungsbereich für ein zweites, den detektierbaren Anteil nicht enthaltendes Fluid definiert ist, und wobei der erste Strömungsbereich den zweiten Strömungsbereich vollständig umgibt.

Das erste und/oder zweite Fluid kann ein Gas, beispielsweise Erdgas, oder eine Flüssigkeit sein. Entsprechend kann die Fluideintrittsöffnung mit einer Gasversorgung, beispielsweise einer Erdgasversorgung, oder einer Flüssigkeitsversorgung verbunden sein. Der detektierbare Anteil ist eine sicherheitsgerichtete Eigenschaft des Fluids. Es kann sich dabei um einen dem Fluid gezielt zugeführten Zusatz handeln. Es ist aber auch möglich, dass der detektierbare Zusatz ein natürlicherweise in dem Fluid enthaltener Bestandteil ist. Durch diesen Anteil ist das Fluid detektierbar, sei dies durch die Sinne einer Person oder durch eine geeignete Sensorik. Auf diese Weise kann eine Leckage z.B. bei entzündlichen Fluiden schnell erkannt werden.

Das nicht mehr detektierbare Fluid ist erfindungsgemäß stets von noch detektierbarem Fluid umspült, indem der erste Strömungsbereich vollständig den zweiten Strömungsbereich umgibt. Tritt also eine externe Leckage auf, durch die Fluid aus der Vorrichtung in die Umgebung gelangt, besitzt dieses ausgetretene Fluid stets noch die detektierbare Eigenschaft. Die Leckage kann sicher festgestellt und es können geeignete Gegenmaßnahmen ergriffen werden, z.B. eine Unterbrechung der Fluidzufuhr. Die erfindungsgemäße Vorrichtung erlaubt in sicherer Weise das Führen eines Fluids ohne die beim Stand der Technik bestehenden Sicherheitsprobleme.

Die einem Fluid gezielt zugegebenen detektierbaren Anteile können einen Prozess, in dem das Fluid verwendet werden soll, durch unerwünschte Nebenwirkungen/- reaktionen negativ beeinträchtigen. Ein Nichtvorhandensein des detektierbaren Anteils hätte allerdings ein sicherheitstechnisches Risiko der Prozessführung zur Folge. Die Erfindung basiert daher auf dem Prinzip, ein Fluid, insbesondere eine Flüssigkeit oder ein Gas, mit einem nicht detektierbaren Anteil von einem Fluid, insbesondere ebenfalls einer Flüssigkeit oder einem Gas, mit detektierbarem Anteil zu umspülen. Bei der Erfindung umgibt ein äußerer Strömungsbereich, in dem das Fluid mit detektierbarem Anteil geführt wird, vollständig einen inneren Strömungsbereich, worin sich das Fluid ohne den detektierbaren Anteil befindet. Somit ist es möglich, ein Fluid, das die für die Sicherheit erforderlichen detektierbaren Anteile nicht besitzt, ohne sicherheitstechnisches Risiko sowie ohne zusätzliche Sicherheitstechnik (Sensorik o.ä.) zu führen, wodurch nachteilige Einflüsse auf den Prozess, in welchem das Fluid zur Anwendung kommt, ausbleiben. Ferner besteht die Möglichkeit das Fluid mit dem sicherheitstechnisch detektierbaren Anteil ebenfalls als ein Prozessfluid, beispielsweise in einer anderen Prozessstufe, aktiv zu nutzen und somit zwei Fluide gleichzeitig zu befördern. Eine interne Leckage des inneren Strömungsbereiches und/oder eine externe Leckage des äußeren Strömungsbereiches wird dadurch sicherheitstechnisch beherrscht, dass jeweils nur das mit dem detektierbaren Anteil versehende Fluid oder eine Mischung aus beiden Fluiden in die Umgebung gelangen kann. Das bei einer Leckage in die Umgebung gelangende Fluid besitzt also stets noch die detektierbare Eigenschaft.

Es sind alle denkbaren Kombinationen der in dem äußeren und inneren Strömungsbereich befindlichen Fluide möglich. So können das erste und das zweite Fluid jeweils ein Gas oder jeweils eine Flüssigkeit sein. Auch können das erste Fluid ein Gas und das zweite Fluid eine Flüssigkeit oder das erste Fluid eine Flüssigkeit und das zweite Fluid ein Gas sein. Es ist auch eine beliebige Strömungsrichtung in den beiden Strömungsbereichen vorstellbar (Gegen-, Kreuz- oder Gleichstrom). Auch denkbar ist, dass in einem der beiden Strömungsbereiche ein Fluid nicht strömt.

Nach einer Ausgestaltung kann der detektierbare Anteil ein Odorierungsmittel, insbesondere ein schwefelhaltiges oder aber auch ein schwefelfreies Odorierungsmittel, das z.B. Acrylatgemische aufweist und einen lösungsmittelartigen Geruch besitzt, sein. Solche Odorierungsmittel werden als Warngeruch oft zur Erkennbarkeit von explosiven Gasen eingesetzt, so z.B. schwefelhaltige Odorierungsmittel bei Erdgas, um eine Explosionsgefahr im Fall einer Leckage zu minimieren. Die detektierbare Substanz in dem Fluid kann aber auch ein Farbstoff sein. Aufgrund dieses Farbstoffes ist das Fluid visuell zu erkennen und somit eine Leckage schnell feststellbar. Es ist auch denkbar, als detektierbaren Anteil eine andere Reagenz in dem Fluid vorzusehen, die eine Detektion durch eine geeignete Sensorik oder ähnliches erlaubt. Wie bereits erläutert, kann der detektierbare Anteil auch ein natürlicher Bestandteil des Fluids sein, beispielsweise der natürliche Schwefelanteil des Erdgases.

Insbesondere für die Anwendung als Vorstufe eines in einem Brennstoffzellenheizgerät ablaufenden Energieumwandlungsprozesses ist erfindungsgemäß weiter vorgesehen, dass der erste und der zweite Strömungsbereich miteinander verbunden sind, wobei der erste Strömungsbereich in Strömungsrichtung eines Fluids zwischen der Fluideintrittsöffnung und dem zweiten Strömungsbereich angeordnet ist, so dass das Fluid bei Durchströmen der Vorrichtung von der Fluideintrittsöffnung zu der Fluidaustrittsöffnung zuerst den ersten Strömungsbereich und anschließend den zweiten Strömungsbereich und die Fluidaustrittsöffnung durchströmt, und wobei die Vorrichtung weiterhin eine in dem zweiten Strömungsbereich angeordnete Behandlungseinrichtung aufweist, in der der detektierbare Anteil aus dem Fluid entfernt wird.

Wie eingangs erläutert, kann es bei manchen Anwendungen, insbesondere in Brennstoffzellenheizgeräten, allerdings erforderlich sein, die detektierbaren Zusätze zu entfernen, da diese sich z.B. bei einer Verwendung des Fluids in weiteren Einrichtungen eines Brennstoffzellenheizgeräts wie einer Reformereinheit oder der Brennstoffzelle schädlich auswirken. Das Entfernen des Anteiles erfolgt erfindungsgemäß in der Behandlungseinrichtung. Ein Entfernen des detektierbaren Anteiles bedeutet in diesem Zusammenhang, dass dieser von dem Fluid getrennt werden kann, z.B. abgeschieden werden kann. Der Anteil kann aber auch z.B. chemisch in einen anderen Stoff umgewandelt werden, so dass er nicht mehr als detektierbarer Anteil vorhanden ist. Die Behandlungseinrichtung kann entsprechend eine Abscheidevorrichtung bzw. ein (chemischer) Reaktor sein. Entscheidend ist lediglich, dass der möglicherweise für den weiteren Prozessverlauf schädliche detektierbare Anteil seine nachteilige Wirkung verliert und die detektierbare Eigenschaft des Fluids in der Behandlungseinrichtung entsprechend verloren geht. Indem die Behandlungseinrichtung in dem von dem ersten Strömungsbereich umgebenen zweiten Strömungsbereich angeordnet ist, ist sichergestellt, dass möglicherweise aus dem ersten Strömungsbereich in die Umgebung entweichendes Fluid stets detektierbar ist. Da insbesondere schwefelhaltige Odorierungsmittel z.B. bei Verwendung des Erdgases in Brennstoffzellenheizgeräten entfernt werden müssen, kann die Behandlungseinrichtung nach dieser Ausgestaltung also eine Entschwefelungsvorrichtung sein.

Nach einer besonders praxisgemäßen Ausgestaltung kann die Behandlungseinrichtung einen Adsorber, insbesondere einen Festbettadsorber, aufweisen. Beim Kontakt des Fluids mit dem Adsorber, beispielsweise einem Über- oder Durchströmen des Adsorbers, wird der detektierbare Anteil z.B. an der Adsorberoberfläche aufgenommen und so entfernt. Derartige Adsorbentien sind an sich bekannt.
Es kann weiterhin ein Filter, z.B. eine Filtermatte, am Ausgang der Behandlungsvorrichtung vorgesehen sein, um z.B. durch Abrieb entstandene Partikel oder andere Rückstände in der Vorrichtung zurückzuhalten und so nachfolgende Prozessstufen davor zu schützen. Um eine möglichst großflächige Anströmung des Filters zu gewährleisten, kann vor dem Filter ein von dem Adsorbermaterial freier Bereich, beispielsweise eine Kammer, vorgesehen sein. Dies führt zu einer gleichmäßigen Druckverteilung. Außerdem können zur Begrenzung und Halterung des Filters vorgesehene Wände (z.B. gebildet durch Lamellen) seitlich ausgespart sein, um eine größere Anströmfläche für den Filter bereitzustellen.

Gemäß einer weiteren Ausgestaltung kann der Strömungsweg des Fluids mäanderförmig zumindest durch die Behandlungseinrichtung verlaufen. Auf diese Weise werden eine effektive Entfernung des detektierbaren Anteiles aufgrund eines intensiven Kontakts des Fluids mit der Behandlungseinrichtung und gleichzeitig eine kompakte und zweckmäßige Bauform der Vorrichtung erreicht. Außerdem kann ein geringer Strömungsquerschnitt realisiert werden, was bei gegebenem Volumenstrom zu einer hohen Strömungsgeschwindigkeit und damit einem effektiven Einsatz der Vorrichtung im Betrieb führt. Weiterhin ist auf diese Weise ein großes Länge-zu-Durchmesser-Verhältnis realisierbar, was einem idealen Rohrreaktor nahekommt. Für das mäanderförmige Führen des Fluids können in der Behandlungseinrichtung geeignete, versetzt zueinander angeordnete Führungslamellen vorgesehen sein. Auf diese Weise wird die Führung in besonders einfacher Weise erreicht. Diese Lamellen können nach einer weiteren Ausgestaltung zumindest teilweise lösbar in der Vorrichtung fixiert sein. Durch die Lösbarkeit können einzelne Lamellen hinzugefügt oder entfernt werden. Dadurch ist eine Anpassung an unterschiedliche Adsorbervolumina wie auch an deren z.T. unterschiedliche Anforderungen an die Strömungsgeschwindigkeit durch Veränderung des Strömungsquerschnitts möglich. Die Vorrichtung ist so in flexibler Weise für unterschiedliche Systemgrößen verwendbar.

Der erste Strömungsbereich kann weiterhin durch einen ersten Behälter und der zweite Strömungsbereich durch einen zweiten Behälter gebildet sein, wobei der zweite Behälter in dem ersten Behälter angeordnet ist. Auf diese Weise wird in besonders einfacher Weise jederzeit sichergestellt, dass das Fluid ohne den detektierbaren Anteil jederzeit vollständig von Fluid mit dem detektierbaren Anteil umströmt ist. Die Behälter können z.B. eine quader- oder, wie nachfolgend beispielhaft dargestellt, eine ellipsoidförmige Geometrie besitzen, wobei der eine Behälter jeweils in dem anderen Behälter angeordnet ist. Soweit der erste Behälter z.B. einen Deckel oder eine andere Öffnung zum Einbringen und gegebenenfalls Warten des zweiten Behälters besitzt, kann diese Öffnung über eine geeignete Dichtung, im geschlossenen Zustand abgedichtet sein.

Nach einer weiteren besonders praxisgemäßen Ausgestaltung können der erste Strömungsbereich durch ein erstes Rohr und der zweite Strömungsbereich durch ein zweites Rohr gebildet sein, wobei das zweite Rohr in dem ersten Rohr angeordnet ist. In diesem Fall wird also durch eine Rohr-in-Rohr-Ausführung sichergestellt, dass das Fluid ohne den detektierbaren Anteil jederzeit vollständig von dem Fluid mit dem detektierbaren Anteil umströmt wird.

Die Fluidaustrittsöffnung der Vorrichtung kann nach einer weiteren Ausgestaltung mit einer Fluideintrittsöffnung eines Brennstoffzellenheizgeräts, insbesondere einer Reformereinheit eines Brennstoffzellenheizgeräts, verbunden sein. Wie eingangs erläutert, wirken die schwefelhaltigen Odorierungsmittel sowie die natürlich vorhandenen Schwefelbestandteile des Erdgases in Brennstoffzellenheizgeräten und insbesondere in der Reformereinheit als Katalysatorgift, deren Zugang zu den Katalysatoren somit zu vermeiden ist. Mit dieser Ausgestaltung ist dies gewährleistet, ohne dass die Sicherheit bezüglich der Detektierbarkeit des Fluids beeinträchtigt wird. Weiterhin müssen bei dieser erfindungsgemäßen Vorrichtung aufgrund der Umspülung des von dem detektierbaren Anteil getrennten Fluids mit Fluid, welches den detektierbaren Anteil noch aufweist, keine zusätzlichen Sicherheitssensoren oder ähnliches vorgesehen werden. Die erfindungsgemäße Vorrichtung kann zumindest das Brennstoffzellenheizgerät und die Reformereinheit umfassen.

Die Erfindung löst die eingangs genannte Aufgabe außerdem durch ein Brennstoffzellenheizgerät umfassend ein Gehäuse, in dem sich zumindest eine Reformereinheit und eine Brennstoffzelle und gegebenenfalls weitere Komponenten sowie eine Entschwefelungsvorrichtung zum Entfernen eines schwefelhaltigen Bestandteils aus einem der Reformereinheit und/oder der Brennstoffzelle zuzuführenden Prozessfluid befinden, wobei die Entschwefelungsvorrichtung durch eine fluiddichte Trennwand von einem Bereich, in dem die Reformereinheit und die Brennstoffzelle installiert sind, abgegrenzt ist.

Der schwefelhaltige Bestandteil kann z. B. ein zugesetztes schwefelhaltiges Odorierungsmittel und/oder ein natürlicher Bestandteil des Prozessfluids sein. Die Entschwefelungsvorrichtung kann eine erfindungsgemäße Vorrichtung zum Leiten eines Fluids sein oder auch jede andere mögliche Ausgestaltung haben. Die Entschwefelungsvorrichtung ist also zwar innerhalb des Gehäuses des Brennstoffzellenheizgeräts angeordnet, jedoch durch eine fluiddichte Trennwand hermetisch von dem inneren Bereich des Geräts mit Reformereinheit, Brennstoffzelle etc. separiert. Dies hat einerseits den Vorteil, dass die Betriebstemperatur der Entschwefelungsvorrichtung niedrig gehalten und damit deren Leistungsfähigkeit sowie Standzeit erhöht werden kann. Andererseits wird durch diese Anordnung innerhalb des Gehäuses eine kompakte Bauform des Brennstoffzellenheizgeräts erreicht. Ferner besteht bei Verwendung der eingangs beschriebenen erfindungsgemäßen Ausgestaltung der Entschwefelungsvorrichtung mit zwei Strömungsbereichen, wobei ein Strömungsbereich von dem anderen vollständig umgeben ist, hinsichtlich einer externen Leckage auch kein Sicherheitsrisiko bei der Installation der Entschwefelungsvorrichtung außerhalb des inneren Bereichs eines Brennstoffzellenheizgeräts.

Ein Ausführungsbeispiel der Erfindung wird nachfolgend anhand von Zeichnungen näher erläutert. Es zeigen schematisch:
- Fig. 1: einen Querschnitt einer erfindungsgemäßen Vorrichtung nach einem ersten Ausführungsbeispiel,
- Fig. 2: eine ausschnittsweise Darstellung zur Veranschaulichung der Funktion einer erfindungsgemäßen Vorrichtung,
- Fig. 3: ein erfindungsgemäßes Brennstoffzellenheizgerät in einem Vertikalschnitt, und
- Fig. 4: das Brennstoffzellenheizgerät aus Fig. 3 in einer Ansicht von oben.

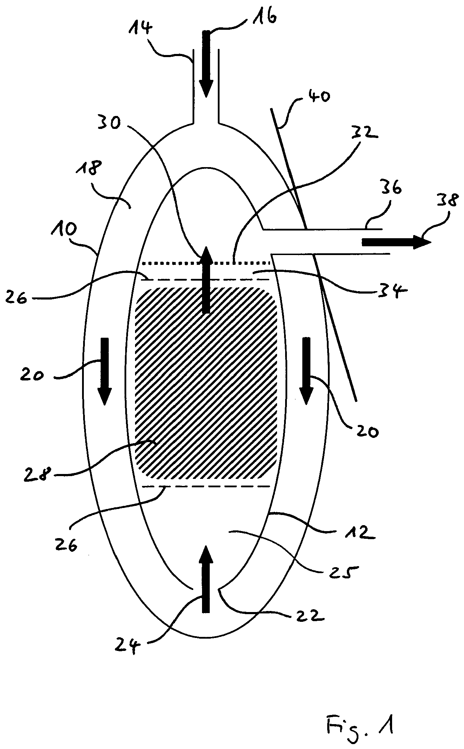

Die in Fig. 1 gezeigte erfindungsgemäße Vorrichtung besitzt einen hier als Ellipsoid dargestellten ersten äußeren Behälter 10 und einen zweiten, ebenfalls hier als Ellipsoid dargestellten in dem ersten Behälter 10 angeordneten, inneren Behälter 12. Auf diese Weise umgibt der äußere Behälter 10 den inneren Behälter 12 vollständig. Der erste Behälter 10 besitzt eine Gaseintrittsöffnung 14, durch die Gas mit einem detektierbaren Anteil, vorliegend Erdgas mit einem schwefelhaltigen Odorierungsmittel wie auch den natürlich vorhandenen Schwefelbestandteilen, in die Vorrichtung eintritt, wie dies in Fig. 1 durch den Pfeil 16 veranschaulicht ist. Das Gas strömt anschließend in dem den inneren Behälter 12 umgebenden Zwischenraum 18 als mit der Gaseintrittsöffnung 14 verbundenen ersten Strömungsbereich 18 zwischen der Außenwand des inneren Behälters 12 und der Innenwand des äußeren Behälters 10 an allen Seiten in der Darstellung in Fig. 1 nach unten. Dies ist durch die Pfeile 20 in dem Querschnitt in Fig. 1 dargestellt. An dem in Fig. 1 unteren Ende des inneren Behälters 12 weist dieser eine Öffnung 22 auf, durch die das Gas anschließend aus dem Zwischenraum 18 des äußeren Behälters 10 in der Darstellung in Fig. 1 nach oben in den inneren Behälter 12 strömt, wie dies durch den Pfeil 24 in Fig. 1 veranschaulicht ist. In dem inneren Behälter 12 ist entsprechend ein zweiter Strömungsbereich 25, welcher zur gleichmäßigen Druckverteilung des Gases und somit zur großflächigen Anströmung des Adsorbers 28 dient, gebildet.

In dem inneren Behälter 12 sind zwei in Strömungsrichtung des Gases hintereinander angeordnete Siebböden 26 vorgesehen, die zwischen sich ein Adsorberfestbett 28 begrenzen. Das in den inneren Behälter 12 eintretende Gas durchströmt zunächst den in Strömungsrichtung ersten Siebboden 26 und anschließend das Adsorberbett 28. Beim Durch- bzw. Überströmen des Adsorberbetts 28 werden alle in dem Gas enthaltenen Schwefelverbindungen an der Materialoberfläche adsorbiert und so entfernt. Das Gas ohne die schwefelhaltigen Bestandteile verlässt anschließend den Adsorber 28 durch den in Strömungsrichtung zweiten Siebboden 26, wie dies in Fig. 1 durch den Pfeil 30 veranschaulicht ist. Stromab des Adsorbers 28 und des zweiten Siebbodens 26 ist in dem inneren Behälter 12 weiterhin ein beispielsweise als Filtermatte ausgebildeter Filter 32 angeordnet, der von dem entschwefelten Gas nach Verlassen des Adsorberbetts 28 und des zweiten Siebbodens 26 ebenfalls durchströmt wird. In diesem Filter 32 werden durch Abrieb entstandene Partikel oder andere Rückstände in der durch die Siebböden 26 und das Adsorberbett 28 gebildeten Behandlungseinrichtung zurückgehalten. Dabei ist in Strömungsrichtung des Gases vor dem Filter 32 ein von dem Adsorbermaterial freier Bereich 34 vorgesehen. Dies führt ebenfalls zu einer gleichmäßigen Druckverteilung des Gases und damit zu einem besonders gleichmäßigen und großflächigen Anströmen des Filters 32.

Der innere Behälter 12 besitzt weiterhin eine in der Darstellung in Fig. 1 an seinem oberen Ende angeordnete, mit dem in dem inneren Behälter 12 gebildeten Strömungsbereich 25 verbundene Gasaustrittsöffnung 36. Das die Behandlungseinrichtung und den Filter 32 durchströmende entschwefelte Gas verlässt die erfindungsgemäße Vorrichtung durch diese Gasaustrittsöffnung 36, wie dies in Fig. 1 durch den Pfeil 38 veranschaulicht ist. In dem in Fig. 1 gezeigten Ausführungsbeispiel dient die Gasaustrittsöffnung 36 gleichzeitig als Gaseintrittsöffnung einer Reformereinheit eines Brennstoffzellenheizgeräts oder bei der Installation der Entschwefelungsvorrichtung außerhalb des Brennstoffzellenheizgeräts als Gaseintrittsöffnung in den inneren Bereich der Anlage zur weiteren Verbindung entsprechender Komponenten. In Fig. 1 ist lediglich jeweils die Außenwand ausschnittsweise bei dem Bezugszeichen 40 angedeutet. Das entschwefelte Erdgas kann in der Reformereinheit nun als Primärenergieträger genutzt werden, um daraus ein wasserstoffreiches Gas zu erzeugen, ohne dass die Gefahr einer Vergiftung des Katalysatormaterials der Reformereinheit und/oder anderer Prozessstufen besteht. Gleichzeitig ist durch die erfindungsgemäße Vorrichtung gewährleistet, dass das in dem Adsorberbett 28 entschwefelte Gas jederzeit von in dem Zwischenraum 18 des äußeren Behälters 10 strömendem noch detektierbaren Gas umspült ist. Im Fall einer Leckage der Vorrichtung und einem entsprechenden Austreten von Gas aus dem äußeren Behälter 10 ist dieses austretende Gas also noch anhand des im äußeren Behälter vorhandenen detektierbaren Anteils schnell und einfach wahrnehmbar.

Obgleich in Fig. 1 ein Ausführungsbeispiel mit zwei ineinander angeordneten ellipsoiden Behältern 10 und 12 gezeigt ist, sind selbstverständlich auch beliebige andere geometrische Ausführungen denkbar, bei denen eine Umspülung z.B. des entschwefelten Gases durch detektierbares Gas sichergestellt ist. Lediglich beispielhaft genannt seien quaderförmige Behälter oder Rohr-in-Rohr-Ausführungen, bei denen zwei Rohre unterschiedlichen Durchmessers ineinander angeordnet werden, wobei von dem Fluid zuerst der zwischen der Außenfläche des inneren Rohrs und der Innenfläche des äußeren Rohrs gebildete Zwischenraum durchströmt wird und anschließend das innere Rohr mit der Behandlungseinrichtung. Weiterhin ist die Erfindung auch zum Entfernen anderer detektierbarer Zusätze anwendbar, z.B. Farbstoffe oder andere Reagenzen, die mittels einer geeigneten Sensorik oder durch die Sinne einer Person erkannt werden können.

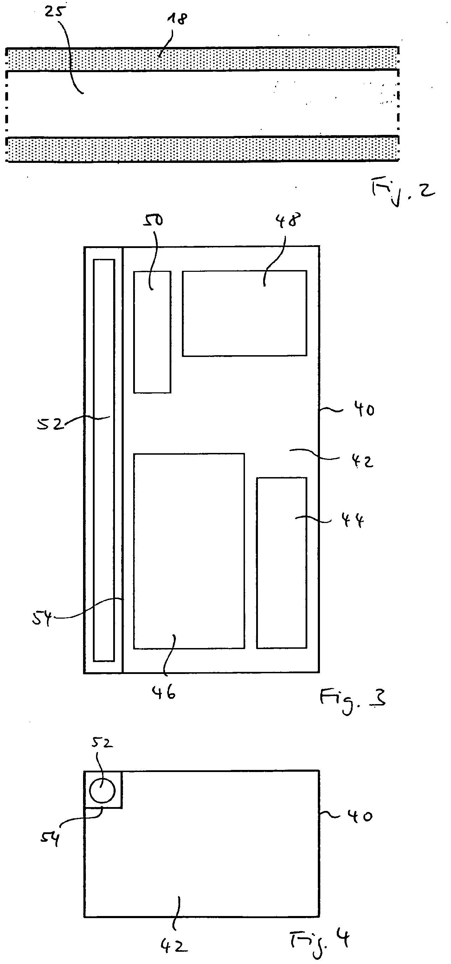

Fig. 2 veranschaulicht das erfindungsgemäße Prinzip, wobei gleiche Bezugszeichen wie in Fig. 1 gleiche Gegenstände bezeichnen. Zu erkennen ist die allseitige Umströmung des zweiten Strömungsbereichs 25 durch den ersten Strömungsbereich 18, wobei hier ausschnittsweise eine Rohr-in-Rohr-Anordnung gezeigt ist. In den Figuren 3 und 4 ist ein erfindungsgemäßes Brennstoffzellenheizgerät gezeigt. Es besitzt ein Gehäuse 40 mit einem inneren Bereich 42, in dem sich in an sich bekannter Weise eine Brennstoffzelle 44 bzw. ein Brennstoffzellenstack 44, eine Reformereinheit 46, ein Wechselrichter bzw. eine Elektrik 48 sowie ein Zusatzheizgerät 50 als Hauptkomponenten befinden. Ebenfalls in dem Gehäuse befindet sich eine Entschwefelungsvorrichtung 52, beispielsweise ausgebildet wie in den Figuren 1 und 2 dargestellt. Über nicht dargestellte durch die Trennwand 54 geführte Fluidein- und -austrittsöffnungen kann Fluid aus dem inneren Bereich 42 in die Entschwefelungsvorrichtung 52 und aus dieser wieder in den inneren Bereich 42 geführt werden. Sie ist durch eine Trennwand 54 fluiddicht von dem inneren Bereich 42 getrennt, befindet sich aber dennoch in dem Gehäuse 40 des Brennstoffzellenheizgeräts.

## Patentansprüche

1. Vorrichtung zum Führen mindestens eines Fluids, umfassend eine Fluideintrittsöffnung (14) und eine Fluidaustrittsöffnung (36), wobei zwischen der Fluideintrittsöffnung (14) und der Fluidaustrittsöffnung (36) ein erster Strömungsbereich (18) für ein erstes, einen detektierbaren Anteil enthaltendes Fluid und ein zweiter Strömungsbereich (25) für ein zweites, den detektierbaren Anteil nicht enthaltendes Fluid definiert ist, und wobei der erste Strömungsbereich (18) den zweiten Strömungsbereich (25) vollständig umgibt, **dadurch gekennzeichnet, dass** der erste und der zweite Strömungsbereich (18, 25) miteinander verbunden sind, wobei der erste Strömungsbereich (18) in Strömungsrichtung eines Fluids zwischen der Fluideintrittsöffnung (14) und dem zweiten Strömungsbereich (25) angeordnet ist, so dass das Fluid bei Durchströmen der Vorrichtung von der Fluideintrittsöffnung (14) zu der Fluidaustrittsöffnung (36) zuerst den ersten Strömungsbereich (18) und anschließend den zweiten Strömungsbereich (25) durchströmt, und dass die Vorrichtung weiterhin eine in dem zweiten Strömungsbereich (25) angeordnete Behandlungseinrichtung (28) aufweist, in der der detektierbare Anteil aus dem Fluid entfernt wird.

2. Vorrichtung nach Anspruch 1, **dadurch gekennzeichnet, dass** das erste und das zweite Fluid ein Gas ist oder, dass das erste und das zweite Fluid eine Flüssigkeit ist.

3. Vorrichtung nach Anspruch 1, **dadurch gekennzeichnet, dass** das erste Fluid ein Gas und das zweite Fluid eine Flüssigkeit ist oder, dass das erste Fluid eine Flüssigkeit und das zweite Fluid ein Gas ist.

4. Vorrichtung nach einem der vorhergehenden Ansprüche, **dadurch gekennzeichnet, dass** der detektierbare Anteil ein dem Fluid zugesetztes Odorierungsmittel, oder ein natürlicher Bestandteil des Fluids ist

5. Vorrichtung nach einem der vorhergehenden Ansprüche, **dadurch gekennzeichnet, dass** der detektierbare Anteil ein schwefelhaltiger Bestandteil ist.

6. Vorrichtung nach einem der Ansprüche 1 bis 3, **dadurch gekennzeichnet, dass** der detektierbare Anteil ein Farbstoff ist.

7. Vorrichtung nach einem der vorhergehenden Ansprüche, **dadurch gekennzeichnet, dass** die Behandlungseinrichtung (28) einen Adsorber (28) aufweist.

8. Vorrichtung nach einem der vorhergehenden Ansprüche, **dadurch gekennzeichnet, dass** der Strömungsweg mäanderförmig durch die Behandlungseinrichtung (28) verläuft.

9. Vorrichtung nach einem der vorhergehenden Ansprüche, **dadurch gekennzeichnet, dass** der Strömungsweg zumindest teilweise durch Führungslamellen für das Fluid definiert ist.

10. Vorrichtung nach Anspruch 9, **dadurch gekennzeichnet, dass** die Lamellen zumindest teilweise lösbar in der Vorrichtung fixiert sind.

11. Vorrichtung nach einem der vorhergehenden Ansprüche, **dadurch gekennzeichnet, dass** ein Filter (32) nach der Behandlungseinrichtung (28) und gegebenenfalls ein Siebboden (26) angeordnet ist, durch den entstandene Abriebpartikel oder andere Rückstände vor dem Austritt des Fluids aus der Behandlungseinrichtung (28) zurückgehalten werden.

12. Vorrichtung nach einem der vorhergehenden Ansprüche, **dadurch gekennzeichnet, dass** der erste Strömungsbereich (18) durch einen ersten Behälter (10) und der zweite Strömungsbereich (25) durch einen zweiten Behälter (12) gebildet ist, wobei der zweite Behälter (12) in dem ersten Behälter (10) angeordnet ist.

13. Vorrichtung nach einem der vorhergehenden Ansprüche, **dadurch gekennzeichnet, dass** der erste Strömungsbereich (18) durch ein erstes Rohr und der zweite Strömungsbereich (25) durch ein zweites Rohr gebildet ist, wobei das zweite Rohr in dem ersten Rohr angeordnet ist.

14. Vorrichtung nach einem der vorhergehenden Ansprüche, **dadurch gekennzeichnet, dass** die Fluidaustrittsöffnung (36) mit einer Eintrittsöffnung (36) eines Brennstoffzellenheizgeräts (40) verbunden ist.

15. Vorrichtung nach einem der vorhergehenden Ansprüche, **dadurch gekennzeichnet, dass** die Vorrichtung keine Sicherheitssensoren zur Leckagedetektion des Fluids aufweist.

16. Brennstoffzellenheizgerät umfassend ein Gehäuse, in dem sich zumindest eine Reformereinheit und eine Brennstoffzelle sowie eine Entschwefelungsvorrichtung zum Entfernen eines schwefelhaltigen Bestandteils aus einem der Reformereinheit und/oder der Brennstoffzelle zuzuführenden Prozessfluid befinden, wobei als Entschwefelungsvorrichtung eine Vorrichtung gemäß einem der vorangehenden Ansprüche vorgesehen ist, und wobei die Entschwefelungsvorrichtung durch eine fluiddichte Trennwand von einem Bereich, in dem die Reformereinheit und die Brennstoffzelle installiert sind, abgegrenzt ist.

## Claims

1. A device for guiding at least one fluid, comprising a fluid inlet opening (14) and a fluid outlet opening (36), wherein between the fluid inlet opening (14) and the fluid outlet opening (36), a first flow region (18) is defined for a first fluid containing a detectable component and a second flow region is defined for a second fluid that does not contain the detectable component, and wherein the first flow region (18) completely surrounds the second flow region (25), **characterized in that** the first and second flow region (18, 25) are connected to each other, wherein the first flow region (18) is arranged in the direction of flow between the fluid inlet opening (14) and the second flow region (25) so that the fluid, when flowing through the device from the fluid inlet opening (14) to the fluid outlet opening (36), initially flows through the first flow region (18) and then the second flow region (25), and the device moreover has a treatment apparatus (28) arranged in the second flow region (25) in which the detected component is removed from the fluid.

2. The device according to claim 1, **characterized in that** the first and second fluid is a gas, or the first and second fluid is a liquid.

3. The device according to claim 1, **characterized in that** the first fluid is a gas and the second fluid is a liquid, or the first fluid is a liquid in the second fluid is a gas.

4. The device according to one of the preceding claims, **characterized in that** the detectable component is an odorant which is added to the fluid, or a natural constituent of the fluid.

5. The device according to one of the preceding claims, **characterized in that** the detectable component is a sulfur-containing constituent.

6. The device according to one of claims 1 to 3, **characterized in that** the detectable component is a dye.

7. The device according to one of the preceding claims, **characterized in that** the treatment apparatus (28) has an absorber (28).

8. The device according to one of the preceding claims, **characterized in that** the flow path runs meanderingly through the treatment apparatus (28).

9. The device according to one of the preceding claims, **characterized in that** the flow path is at least partially defined by guide lamella for the fluid.

10. The device according to claim 9, **characterized in that** the lamella are fixed in the device so as to be at least partially releasable.

11. The device according to one of the preceding claims, **characterized in that** a filter (32) is arranged downstream from the treatment apparatus (28) and possibly a sieve base (26) through which arising abrasion particles or other residue are retained before the fluid exits the treatment apparatus (28).

12. The device according to one of the preceding claims, **characterized in that** the first flow region (18) is formed by a first container (10) and the second flow region (25) is formed by a second container (12), wherein the second container (12) is arranged in the first container (10).

13. The device according to one of the preceding claims, **characterized in that** the first flow region (18) is formed by a first tube, and the second flow region (25) is formed by a second tube, wherein the second tube is arranged in the first container tube.

14. The device according to one of the preceding claims, **characterized in that** the fluid outlet opening (32) is connected to an inlet opening (36) in a fuel cell heating unit (40).

15. The device according to one of the preceding claims, **characterized in that** the device does not have any safety sensors for detecting fluid leakage.

16. A fuel cell heating unit comprising a housing in which at least one reformer unit and one fuel cell are located as well as one desulfurization device for removing a sulfur-containing constituent from a process fluid to be supplied to the reformer unit and/or the fuel cell, wherein the device according to one of the preceding claims is provided as the desulfurization device, and wherein the desulfurization device is separated from a region in which the reformer unit and the fuel cell are installed by a fluid-tight dividing wall.

## Revendications

1. Dispositif destiné à guider au moins un fluide, comprenant une ouverture d'entrée de fluide (14) et une ouverture de sortie de fluide (36), une première zone d'écoulement (18) pour un premier fluide contenant une fraction détectable et une deuxième zone d'écoulement (25) pour un deuxième fluide ne contenant pas la fraction détectable étant définies entre l'ouverture d'entrée de fluide (14) et l'ouverture de sortie de fluide (36), et dans lequel la première zone d'écoulement (18) entoure complètement la deuxième zone d'écoulement (25), **caractérisé en ce que** la première et la deuxième zone d'écoulement (18, 25) sont raccordées l'une à l'autre, la première zone d'écoulement (18) étant disposée dans le sens d'écoulement d'un fluide entre l'ouverture d'entrée de fluide (14) et la deuxième zone d'écoulement (25) de telle sorte que, lors de la traversée du dispositif à partir de l'ouverture d'entrée de fluide (14) vers l'ouverture de sortie de fluide (36), le fluide traverse d'abord la première zone d'écoulement (18) et ensuite la deuxième zone d'écoulement (25), et **en ce que** le dispositif présente en outre un équipement de traitement (28) disposé dans la deuxième zone d'écoulement (25) dans lequel la fraction détectable est enlevée du fluide.

2. Dispositif selon la revendication 1, **caractérisé en ce que** le premier fluide et le deuxième fluide sont un gaz ou **en ce que** le premier et le deuxième fluide sont un liquide.

3. Dispositif selon la revendication 1, **caractérisé en ce que** le premier fluide est un gaz et le deuxième fluide est un liquide, ou **en ce que** le premier fluide est un liquide et le deuxième fluide est un gaz.

4. Dispositif selon l'une des revendications précédentes, **caractérisé en ce que** la fraction détectable est un produit odorant ajouté au fluide ou une composant naturel du fluide.

5. Dispositif selon l'une des revendications précédentes, **caractérisé en ce que** la fraction détectable est un composant contenant du soufre.

6. Dispositif selon l'une des revendications 1 à 3, **caractérisé en ce que** la fraction détectable est un colorant.

7. Dispositif selon l'une des revendications précédentes, **caractérisé en ce que** l'équipement de traitement (28) présente un adsorbeur (28).

8. Dispositif selon l'une des revendications précédentes, **caractérisé en ce que** la voie d'écoulement sinue à travers l'équipement de traitement (28).

9. Dispositif selon l'une des revendications précédentes, **caractérisé en ce que** la voie d'écoulement est définie au moins partiellement par des lamelles de guidage pour le fluide.

10. Dispositif selon la revendication 9, **caractérisé en ce que** les lamelles sont fixées dans le dispositif au moins partiellement de façon détachable.

11. Dispositif selon l'une des revendications précédentes, **caractérisé en ce qu'**il est disposé un filtre (32) après l'équipement de traitement (28) et éventuellement un fond de tamisage (26) par lequel des particules d'abrasion produites ou d'autres résidus sont retenus avant que le fluide sorte de l'équipement de traitement (28).

12. Dispositif selon l'une des revendications précédentes, **caractérisé en ce que** la première zone d'écoulement (18) est formée par un premier récipient (10) et la deuxième zone d'écoulement (25) est formée par un deuxième récipient (12), le deuxième récipient (12) étant disposé dans le premier récipient (10).

13. Dispositif selon l'une des revendications précédentes, **caractérisé en ce que** la première zone d'écoulement (18) est formée par un premier tube et la deuxième zone d'écoulement (25) est formée par un deuxième tube, le deuxième tube étant disposé dans le premier tube.

14. Dispositif selon l'une des revendications précédentes, **caractérisé en ce que** l'ouverture de sortie de fluide (36) est raccordée à une ouverture d'entrée (36) d'un appareil de chauffage à cellules de combustibles (40).

15. Dispositif selon l'une des revendications précédentes, **caractérisé en ce que** le dispositif ne présente pas de capteurs de sécurité pour la détection des fuites du fluide.

16. Appareil de chauffage à cellules de combustibles, comprenant un carter dans lequel se trouvent au moins une unité de reformage et une cellule de combustibles ainsi qu'un dispositif de désulfuration destiné à extraire un composant contenant du souffre à partir d'un fluide de process devant être acheminé à l'unité de reformage et/ou à la cellule de combustibles, un dispositif selon l'une des revendications précédentes étant prévu en tant que dispositif de désulfuration, et le dispositif de désulfuration étant, par une paroi de séparation étanche au fluide, délimité par rapport à une zone dans laquelle l'unité de reformage et la cellule de combustibles sont installées.
